# EUROPÄISCHE PATENTSCHRIFT

(11) **EP 1 346 854 B1**
(45) Veröffentlichungstag und Bekanntmachung des Hinweises auf die Patenterteilung: **03.05.2006**
(21) Anmeldenummer: 02102749.5
(22) Anmeldetag: 13.12.2002
(51) Int. Cl.: B60G 3/06, B60G 21/055, B60G 15/06

(54) **Radaufhängung für ein Kraftfahrzeug**
Motor vehicle wheel suspension
Suspension de roue de véhicule automobile

(30) Priorität: 14.12.2001 EP 01129784
(43) Veröffentlichungstag der Anmeldung: 24.09.2003
(73) Patentinhaber: Ford Global Technologies, LLC, Dearborn, MI 48126 (US)
(72) Erfinder: Ohra-aho, Lauri Mikael, 52074 Aachen (DE); Frantzen, Michael Johannes, 52076 Aachen (DE); Halfmann, Edmund, 41468 Neuss (DE); Fickers, Paul, 6416 HP Heerlen (NL); Rogowski, Frank, 53115 Bonn (DE); Risse, Wolfgang, 40721 Hilden (DE)
(74) Vertreter: Drömer, Hans-Carsten

(56) Entgegenhaltungen:
- EP-A- 1 043 212
- EP-A- 1 101 636
- DE-A- 4 206 896
- DE-A- 4 409 571
- FR-A- 2 663 266
- US-A- 5 797 618

## Beschreibung

Die Erfindung betrifft eine Radaufhängung für ein Kraftfahrzeug enthaltend: ein Lagerelement für die Radachse; einen Träger, an welchem das Lagerelement bezüglich einer im Wesentlichen vertikalen Achse drehbar gelagert ist, wobei die vertikale Achse nahe dem Radzentrum verläuft; ein Federbein, das mit dem Träger verbunden und an der Karosserie abgestützt ist; einen Lenker, welcher mit der Karosserie gekoppelt und mit dem Träger oder dem Lagerelement verbunden ist.

Eine gattungsgemäße Radaufhangung gemäß Oberbegriff des Anspruchs 1 aus der DE 42 06 896 A1 bekannt. Das Rad des Kraftfahrzeugs wird hierbei mit seiner Drehachse an einem Achsschenkel gelagert. Der Achsschenkel ist um eine im Wesentlichen senkrechte Achse drehbar an einem Träger gelagert, welcher mit einem an der Karosserie abgestützten Federbein fest verbunden ist. Ferner ist der Träger schwenkbeweglich mit einem Querträger gekoppelt, welcher kardanisch an der Karosserie gelagert ist. Um den Achsschenkel zu stabilisieren und unerwünschte Drehungen des Federbeines zu verhindern, ist der Achsschenkel über einen weiteren Lenker mit der Karosserie verbunden. Gegenüber einer gewöhnlichen Radaufhängung vom sog. McPherson Typ, bei welcher das Lagerelement und der Träger fest verbunden bzw. einstückig sind, erfordert die beschriebene Radaufhängung zusätzliche Bauelemente und vor allem Anlenkpunkte an der Karosserie.

Eine andere gattungsgemäße Radaufhängung gemäß Oberbegriff des Anspruchs 2 ist aus der DE 44 09 571 A1 bekannt. Hierbei handelt es sich um eine auf der McPherson-Achse basierende Federbeinachse mit einem Achsschenkel, an welchem ein Rad des Kraftfahrzeugs mit seiner Drehachse gelagert ist. Der Achsschenkel ist ferner über ein Federbein bestehend aus einem Dämpferkolben und einer Spiralfeder sowie über einen Querlenker mit der Karosserie gekoppelt. Um die Tendenz einer derartigen Radaufhängung zu Lenkradschwingungen und einem unruhigen Lauf zu verringern, wird gemäß der DE 44 09 571 A1 der Dämpferzylinder durch einen zusätzlich daran angebrachten und mit der Karosserie gekoppelten Lenker verdrehsicher gelagert.

Aus der FR 2 663 266 A ist eine Radaufhängung bekannt, bei der das Rad um eine radzentrumsnahe Achse schwenkbar gelagert ist.

Aus der EP 1 043 212 A und der EP 1 101 636 A sind Radaufhängungen vom konventionellen McPherson-Typ bekannt, bei denen zur Erhöhung der fahrdynamischen Stabilität jeweils ein Stabilisator vorgesehen ist.

Vor diesem Hintergrund war es Aufgabe der vorliegenden Erfindung, eine vereinfachte und kompakte, mit einer konventionellen McPherson-Radaufhängung austauschbare Radaufhängung bereitzustellen, welche eine geringe Übertragung von Störungen und Schwingungen aufweist.

Diese Aufgabe wird durch eine Radaufhängung mit den Merkmalen des Anspruchs 1 sowie durch eine Radaufhängung mit den Merkmalen des Anspruchs 2 gelöst. Vorteilhafte Ausgestaltungen sind in den Unteransprüchen enthalten.

Die erfindungsgemäße Radaufhängung für ein Kraftfahrzeug enthält ein Lagerelement für die Drehachse des aufzuhängenden Rades. Bei dem Rad kann es sich um ein angetriebenes oder nicht angetriebenes Vorderrad oder Hinterrad des Kraftfahrzeugs handeln. Das Lagerelement kann insbesondere ein Achsschenkel oder eine Spindel sein. Dieses ist an einem Träger bezüglich einer im Wesentlichen vertikalen Achse drehbar gelagert, wobei die vertikale Achse in enger Nähe an dem Radzentrum bzw. Radmittelpunkt vorbeiläuft. Dies soll natürlich insbesondere den Fall einschließen, daß die vertikale Achse durch das Radzentrum verläuft. Durch die drehbare Lagerung des Lagerelementes um die erläuterte vertikale Achse wird gegenüber der herkömmlichen McPherson-Achse ein zusätzlicher Freiheitsgrad eingeführt. Der Bremskrafthebel sowie der Beschleunigungskrafthebei und der Stoßradius lassen sich somit beliebig einstellen, wobei diese Größen bevorzugt minimiert werden. Auf diese Weise wird die Erzeugung und Weiterleitung von störenden Schwingungen und Kräften minimiert.

Ferner ist der Träger direkt oder indirekt über ein Federbein mit der Karosserie gekoppelt. Ein Federbein besteht in bekannter Weise aus einem Dämpferkolben und einer Schraubendruckfeder und sorgt für eine gedämpfte, elastische Abstützung des Rades an der Karosserie.

Die Radaufhängung weist darüber hinaus einen Lenker auf, welcher an einem Ende mit der Karosserie des Kraftfahrzeuges gekoppelt ist. Der Lenker kann an der Karosserie insbesondere in mindestens einem Schamiergelenk befestigt sein, so daß dieser sich nur um eine Achse drehen kann. An seinem anderen Ende ist der Lenker bei einer ersten Variante der Erfindung mit dem vorstehend genannten Träger gelenkig gekoppelt. Bei einer zweiten Variante der Erfindung ist der Lenker an seinem zweiten Ende mit dem Lagerelement gelenkig gekoppelt.

Die Radaufhängung ist bei beiden vorstehend genannten Varianten dadurch gekennzeichnet, daß das Federbein und/oder der Träger mit einem Stabilisator gekoppelt ist. Stabilisatoren werden im Fahrzeugbau als Federelemente zur Verbesserung der Straßenlage eines Kraftfahrzeuges verwendet. Häufig sind Stabilisatoren dabei als runde Drehstäbe ausgebildet, deren Mittelteil drehbar an der Karosserie angebracht ist, während die Enden über Gummielemente an den Radaufhängungen (insbesondere den Querlenkern) der Räder angelenkt sind. Bei einem Anheben eines Rades (Einfedern) wird über eine Verdrehung des Stabilisators das andere Rad auch angehoben. Dieser Effekt wirkt bei einer Kurvenfahrt einer übermäßigen seitlichen Neigung der Karosserie entgegen.

Durch die Kopplung zwischen dem Federbein/Träger und dem Stabilisator ist es möglich, das Federbein gegen Verdrehungen beim Auftreten von Kräften in Längs- oder Querrichtung zu stabilisieren, ohne daß hierzu weitere Lenker am Träger und/oder am Lagerelement erforderlich wären. Die Radaufhängung kommt daher mit denselben Anlenkpunkten an der Karosserie - d.h. eine Abstützung für das Federbein und eine schwenkbewegliche Lagerung für den (Quer-)Lenker - aus wie eine herkömmliche McPherson-Achse. Dies ermöglicht es, beide Arten der Radaufhängung wahlweise bei demselben Fahrzeugtyp einzusetzen und auf diese Weise z. B. eine kostengünstigere und eine höherwertige Fahrzeugvariante zu schaffen.

Für die Ausgestaltung der Verbindung zwischen Stabilisator und Federbein/Träger stehen verschiedene Möglichkeiten zur Verfügung. Insbesondere kann der Stabilisator über ein elastisches Lager wie zum Beispiel ein Gummilager oder über ein Kugelgelenk mit dem Federbein bzw. Träger gekoppelt werden. Die genannten Gelenkarten haben den Vorteil, daß diese kostengünstig verfügbar sind.

Der Lenker kann an dem Träger (erste Variante der Erfindung) beziehungsweise dem Lagerelement (zweite Variante der Erfindung) über ein Schamiergelenk befestigt sein. Dies hat den Vorteil, den nachfolgenden Aufbau der Radaufhängung zu versteifen. Bei einer Kopplung des Lenkers an den Träger wirkt sich die Versteifung auch auf das mit dem Träger verbundene Federbein aus, so daß dessen Verdrehung verhindert wird. Der Nachteil einer Ankopplung über ein Schamiergelenk besteht allerdings darin, daß das Federbein in einer Ebene senkrecht zur Schwenkachse des Lenkers (gegenüber der Karosserie) liegen muß, damit eine Bewegung in dieser Konstellation kinematisch möglich ist. Dies schränkt jedoch die Konstruktionsmöglichkeiten der Radaufhängung erheblich ein, so daß in manchen Fällen keine Austauschbarkeit gegen eine gewöhnliche McPherson Achse mehr gegeben ist. Des Weiteren wird das Federungsverhalten des Kraftfahrzeuges durch die vorgeschriebene Ausrichtung des Federbeins unter Umständen ungünstig beeinflußt.

Daher ist im Rahmen der vorliegenden Erfindung der Lenker an dem Träger (erste Variante der Erfindung) beziehungsweise an dem Lagerelement (zweite Variante der Erfindung) über ein Kugelgelenk befestigt. Kugelgelenke sind einerseits kostengünstig verfügbar und erlauben andererseits eine Relativbewegung zwischen den gekoppelten Elementen um beliebige Achsen. Hierdurch entfällt die kinematische Einschränkung, daß das Federbein senkrecht zur Schwenkachse des Lenkers liegen muß, so daß es auch in anderen Ausrichtungen angeordnet werden kann. Die freie Austauschbarkeit der Radaufhängung mit einer standardmäßigen McPherson Achse wird hierdurch in allen Fällen gewährleistet. Eine Verdrehung des Federbeines findet dabei trotz des zusätzlichen Freiheitsgrades des Kugelgelenkes nicht statt, da es durch den Stabilisator hieran gehindert wird.

Weiterhin wird das Federbein in einer relativ zur Vertikalen gekippten Position angeordnet. Eine solche Kippung ist insbesondere bei der vorstehend beschriebenen Verwendung eines Kugelgelenkes zwischen Lenker und Träger beziehungsweise zwischen Lenker und Lagerelement möglich. Vorzugsweise kann das Federbein in Bezug auf die Fahrtrichtung rückwärts geneigt sein, um den Bremsnickausgleich (Anti-dive) der Aufhängung zu verbessern.

Weiterhin wird das Federbein vorzugsweise so ausgerichtet, daß es in derselben Ebene wie die Lenkachse liegt. Hierdurch läßt sich der für die Lenkbewegung verfügbare Raum maximieren.

Im Folgenden wird die Erfindung mit Hilfe der Figuren beispielhaft näher erläutert. Es zeigen:
- Fig. 1: schematisch eine Seitenansicht einer erfindungsgemäßen Radaufhängung gemäß einer ersten Variante ;
- Fig. 2: eine detailliertere perspektivische Darstellung der Radaufhängung gemäß Figur 1;
- Fig. 3: eine perspektivische Ansicht einer Ausgestaltung mit am Träger angekoppeltem Stabilisator;
- Fig. 4: einen Teil einer erfindungsgemäßen Radaufhängung mit einer Spindel;
- Fig. 5: eine perspektivische Darstellung einer erfindungsgemäßen Radaufhängung gemäß einer zweiten Variante.

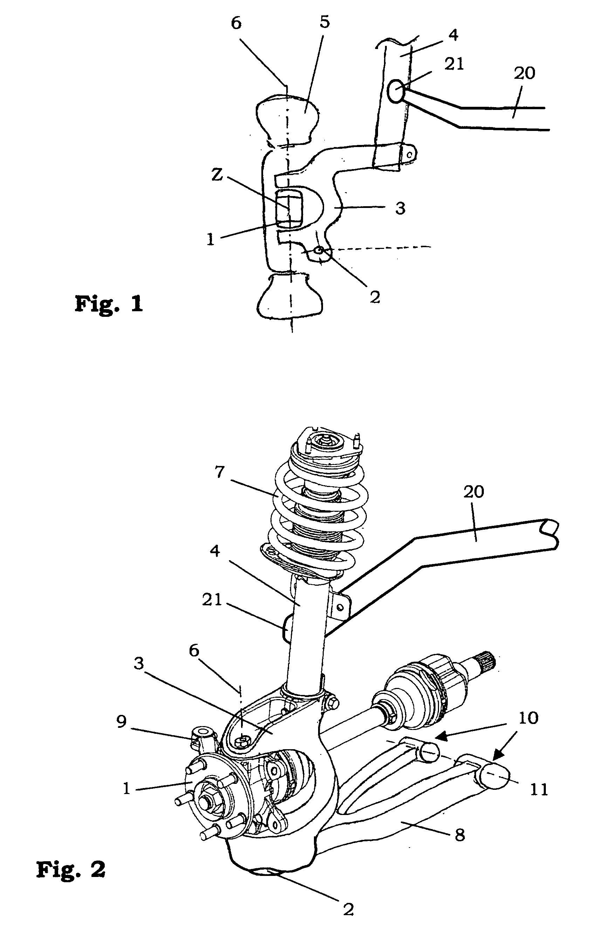

Figur 1 zeigt in einer schematischen Seitenansicht eine erfindungsgemäße Radaufhängung, welche in ihrer Konstruktion von der sogenannten McPherson-Achse ausgeht. Bei Letzterer handelt es sich um eine Einzelradaufhängung, bei der ein Achsschenkel unten an einem schwenkbeweglich an der Karosserie gelagerten Querlenker und oben an einem Schwingungsdämpferrohr ("McPherson-Federbein") gelagert ist. Das Schwingungsdämpferrohr ersetzt somit den oberen Querlenker einer Doppelquerlenkerachse (vgl. "Fachkunde Kraftfahrzeugtechnik", 26. Auflage, Verlag Europa Lehrmittel, Haan-Gruiten, Kap. 4.5.3). Die Lagerung des Querlenkers an der Karosserie findet vorzugsweise in einem Scharniergelenk bzw. bei einem Dreiecksquerlenker in zwei Scharniergelenken statt. Das Schwingungsdämpferrohr wird vorzugsweise in einem elastischen Gummilager an der Karosserie gelagert.

Über die Radaufhängung wird ein Rad 5 des Kraftfahrzeugs mit der Karosserie (nicht dargestellt) verbunden. Das Rad 5 ist dabei mit seiner horizontalen Drehachse an einem Achsschenkel 1 als Lagerelement drehbar gelagert. Der Achsschenkel 1 ist seinerseits um eine vertikale Achse 6 drehbar in einem gabelförmigen Träger 3 gelagert. Die vertikale Achse 6 läuft durch das Zentrum Z des Rades 5 beziehungsweise in großer Nähe an diesem vorbei. Vorzugsweise beträgt ihr Abstand vom Zentrum weniger als 80%, besonders bevorzugt weniger als 20% der Rad- bzw. Felgenbreite. Durch diese drehbewegliche Lagerung des Achsschenkels 1 werden Hebelwege verkürzt, welche bei üblichen Radaufhängungen zur Übertragung von störenden Kräften auf die Lenkung führen.

Der Träger 3 ist an seinem oberen Ende über den Dämpferkolben 4 eines Federbeins mit der Karosserie gekoppelt. Weiterhin ist er an seinem unteren Ende in einem kostengünstigen Standard-Kugelgelenk 2 über den gabelförmigen Lenker 8 (Figur 2) mit der Karosserie verbunden, wobei der Lenker 8 seinerseits in zwei Scharniergelenken 10 drehbeweglich um eine Achse 11 an der Karosserie befestigt ist. Durch diese zusätzliche Ankopplung des Trägers 3 an die Karosserie werden dessen Freiheitsgrade reduziert, was zu einer zusätzlichen Isolation und einer erhöhten Steifheit führt. Die Schwenkachse 11 des Lenkers 8 ist vorzugsweise im Wesentlichen parallel zur Fahrzeuglängsachse.

Des Weiteren ist in Figur 1 ein Endabschnitt eines Stabilisators 20 erkennbar, welcher in einem Gummilager oder Kugelgelenk 21 am Federbein 4 angekoppelt ist. Der Stabilisator 20 hat in bekannter Weise die Grundfunktion, die an derselben Achse befindlichen Räder des Kraftfahrzeuges miteinander zu koppeln. Zusätzlich sorgt der Stabilisator vorliegend dafür, daß Verdrehungen des Federbeines 4 verhindert werden, wenn Kräfte in Längs- oder Querrichtung am Träger 3 angreifen.

Derartige Kräfte würden ohne eine Verdrehsicherung des Federbeines 4 zu dessen Rotation führen können, da der Träger 3 mit dem Lenker 8 (Figur 2) in einem beliebig drehbaren Kugelgelenk 2 verbunden ist.

In Figur 2 ist eine mögliche Ausgestaltung der vorstehend beschriebenen Radaufhängung perspektivisch dargestellt. Dabei ist insbesondere der Aufbau des Federbeines aus Dämpferkolben 4 und Schraubendruckfeder 7 erkennbar. Ferner ist am Achsschenkel 1 ein Ansatz 9 zu sehen, an welchem ein weiteres Lenkerelement beziehungsweise eine Spurstange befestigt werden kann.

Durch die Verwendung des Kugelgelenkes 2 zwischen Lenker 8 und Träger 3 wird es möglich, das Federbein 4 bei Einhaltung der kinematischen Randbedingungen in anderen Ebenen als senkrecht zur Schwenkachse 11 des Lenkers 8 relativ zur Karosserie anzuordnen. Diese Freiheit bei der Positionierung des Federbeines 4 kann dazu verwendet werden, die Packungsdichte des Aufbaus, die Austauschbarkeit mit anderen Typen von Radkonstruktionen, sowie die Kinematik der Radaufhängung zu verbessern. Insbesondere ist es möglich, das Federbein 4 rückwärts geneigt anzuordnen, um hierdurch das Anti-dive Verhalten der Aufhängung zu verbessern. Ferner kann das Federbein in gleicher Weise wie bei einer herkömmlichen McPherson Achse angeordnet werden, um an dieselben Anlenkpunkte zu passen und daher einen leichteren Austausch zu ermöglichen. Schließlich kann die Freiheit bei der Anordnung des Federbeines auch dazu ausgenutzt werden, die Lenkachse und das Federbein in derselben Ebene anzuordnen, um den Raum für die Lenkbewegung zu maximieren.

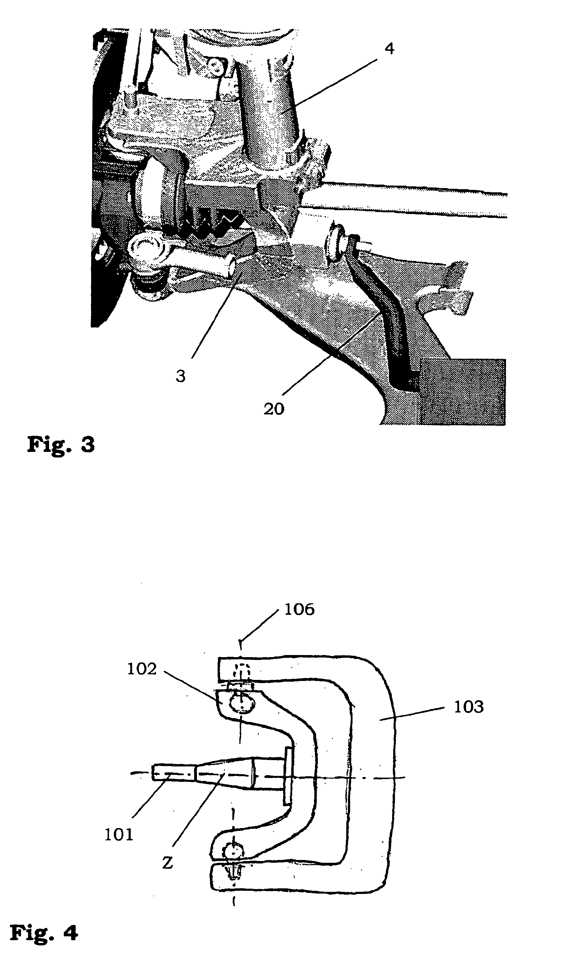

Figur 3 zeigt in einer Perspektive eine Abwandlung der vorstehend beschriebenen Radaufhängung, bei welcher der Stabilisator 20 am Träger 3 (statt am Federbein 4) angekoppelt ist.

Figur 4 zeigt ein Detail einer Radaufhängung, bei welcher das Rad nicht in einem Achsschenkel, sondern an einer Spindel 101 befestigt ist. Die Spindel 101 wird dabei von einem U-förmigen Joch 102 getragen, welches seinerseits an einem U-förmigen Träger 103 drehbeweglich um die vertikale Achse 106 befestigt ist. Erfindungsgemäß verläuft die vertikale Achse 106 wiederum (annähernd) durch das Zentrum Z der Radaufhängung.

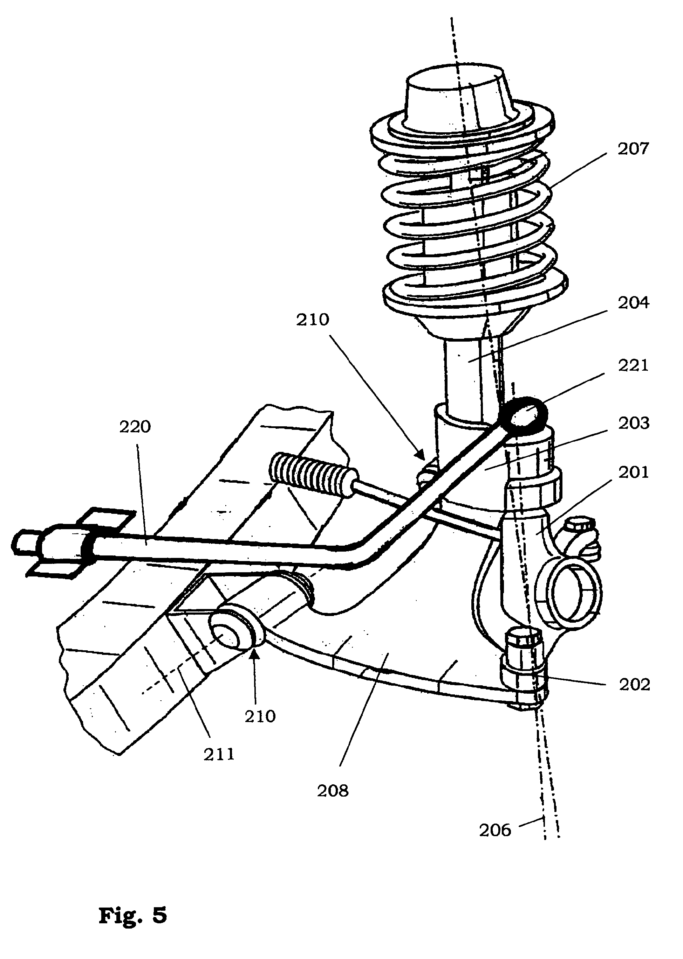

In Figur 5 ist eine zweite Variante einer erfindungsgemäßen Radaufhängung dargestellt, die von einer Radaufhängung gemäß der DE 44 09 571 A1 ausgeht. Gleiche Teile wie bei den Figuren 1 und 2 sind dabei mit korrespondieren, um 200 erhöhten Bezugszeichen versehen.

Die Radaufhängung enthält einen Achsschenkel 201 als Lagerelement für ein Rad (nicht dargestellt), welcher an seinem oberen Ende drehbeweglich um eine vertikale Achse 206 an einem Träger 203 gelagert ist. Der Träger 203 ist seinerseits mit einem Federbein 204, das u.a. eine Spiralfeder 207 enthält, verbunden.

Des Weiteren ist ein (Quer-)Lenker 208 in zwei Scharniergelenken 210 an der Karosserie schwenkbeweglich um eine Achse 211 gelagert. Das andere Ende des Lenkers 208 ist - im Unterschied zur ersten Variante der Figuren 1 bis 4 - in einem Schamiergelenk 202 mit dem Lagerelement 201 verbunden, wobei die Schamierachse mit der vertikalen Achse 206 fluchtet. Anstelle eines Scharniergelenkes 201 könnte auch ein kostengünstiges Standard-Kugelgelenk vorgesehen sein.

Um das Federbein 204 gegen eine Verdrehung zu stabilisieren, ist es über ein Kugelgelenk 221 mit einem Stabilisator 220 verbunden. Die Notwendigkeit der Befestigung eines zusätzlichen Lenkers am Federbein (vgl. DE 44 09 571 A1) entfällt hierdurch, wodurch die Radaufhängung kompatibel mit einer solchen vom McPherson Typ wird.

## Patentansprüche

1. Radaufhängung für ein Kraftfahrzeug, enthaltend
a) ein Lagerelement (1, 101) für die Radachse;
b) einen Träger (3, 103), an welchem das Lagerelement bezüglich einer im Wesentlichen vertikalen Achse (6, 106) drehbar gelagert ist, wobei die vertikale Achse nahe dem Radzentrum (Z) verläuft;
c) ein Federbein (4), das mit dem Träger (3) verbunden und an der Karosserie abgestützt ist;
d) einen Lenker (8), welcher mit der Karosserie gekoppelt und mit dem Träger (3) in einem Gelenk (2) verbunden ist;
**dadurch gekennzeichnet, daß**
das Federbein (4) und/oder der Träger (3, 103) mit einem Stabilisator (20) gekoppelt ist,
dass der Lenker (8) an dem Träger (3, 103) oder dem Lagerelement in einem Kugelgelenk (2) befestigt ist, und daß
das Federbein (4) in einer relativ zur Vertikalen gekippten Position angeordnet ist.

2. Radaufhängung für ein Kraftfahrzeug, enthaltend
a) ein Lagerelement (201) für die Radachse;
b) einen Träger (203), an welchem das Lagerelement bezüglich einer im Wesentlichen vertikalen Achse (206) drehbar gelagert ist, wobei die vertikale Achse nahe dem Radzentrum (Z) verläuft;
c) ein Federbein (204), das mit dem Träger (203) verbunden und an der Karosserie abgestützt ist;
d) einen Lenker (208), welcher mit der Karosserie gekoppelt und mit dem Lagerelement (201) in einem Gelenk (202) verbunden ist;
**dadurch gekennzeichnet, daß**
das Federbein (204) und/oder der Träger (203) mit einem Stabilisator (220) gekoppelt ist,
daß der Lenker (208) an dem Träger (203) oder dem Lagerelement (201) in einem Kugelgelenk befestigt ist, und daß
das Federbein (204) in einer relativ zur Vertikalen gekippten Position angeordnet ist.

3. Radaufhängung nach Anspruch 1 oder 2,
**dadurch gekennzeichnet, dass**
der Stabilisator (20, 220) über ein elastisches Lager oder über ein Kugelgelenk (21, 221) mit dem Federbein (4, 204) und/oder dem Träger (3) gekoppelt ist.

4. Radaufhängung nach mindestens einem der Ansprüche 1 bis 3,
**dadurch gekennzeichnet, daß**
das Federbein (4, 204) in derselben Ebene wie die Lenkachse liegt.

5. Radaufhängung nach mindestens einem der Ansprüche 1 bis 4,
**dadurch gekennzeichnet, daß**
der Lenker (8, 208) an der Karosserie in mindestens einem Schamiergelenk (10, 210) befestigt ist.

6. Radaufhängung nach mindestens einem der Ansprüche 1 bis 5,
**dadurch gekennzeichnet, daß**
das Lagerelement als Achsschenkel (1, 201) oder als Spindel (101) ausgebildet ist.

## Claims

1. Wheel suspension system for a motor vehicle, containing
a) a bearing element (1, 101) for the wheel axle;
b) a beam (3, 103) on which the bearing element is mounted so as to be rotatable with respect to an essentially vertical axis (6, 106), the vertical axis running near to the center (Z) of the wheel;
c) a suspension leg (4) which is connected to the beam (3) and supported on the bodywork;
d) a link (8) which is coupled to the bodywork and connected to the beam (3) in a joint (2),
**characterized in that** the suspension leg (4) and/or the beam (3, 103) are coupled to a stabilizer (20),
**in that** the link (8) is attached to the beam (3, 103) or to the bearing element in a ball-and-socket joint (2),
and **in that** the suspension leg (4) is arranged in a position which is tilted with respect to the vertical.

2. Wheel suspension system for a motor vehicle containing
a) a bearing element (201) for the wheel axle;
b) a beam (203) on which the bearing element is mounted so as to be rotatable with respect to an essentially vertical axis (206), the vertical axis running near to the center (Z) of the wheel;
c) a suspension leg (204) which is connected to the beam (203) and is supported on the bodywork;
d) a link (208) which is coupled to the bodywork and is connected to the bearing element (201) in a joint (202);
**characterized in that** the suspension leg (204) and/or the beam (203) is coupled to a stabilizer (220),
**in that** the link (208) is attached to the beam (203) or to the bearing element (201) in a ball-and-socket joint, and **in that** the suspension leg (204) is arranged in a position which is tilted with respect to the vertical.

3. Wheel suspension system according to Claim 1 or 2, **characterized in that** the stabilizer (20, 220) is coupled to the suspension leg (4, 204) and/or the beam (3) by means of an elastic bearing or by means of a ball-and-socket joint (21, 221).

4. Wheel suspension system according to at least one of Claims 1 to 3, **characterized in that** the suspension leg (4, 204) lies in the same plane as the steering axis.

5. Wheel suspension system according to at least one of Claims 1 to 6, **characterized in that** the link (8, 208) is attached to the bodywork in at least one hinged joint (10, 210).

6. Wheel suspension system according to at least one of Claims 1 to 5, **characterized in that** the bearing element is embodied as an steering swivel (1, 201) or a spindle (101) .

## Revendications

1. Suspension de roue pour un véhicule automobile, comprenant :
a) un élément de palier (1, 101) pour l'essieu ;
b) un support (3, 103) sur lequel l'élément de palier est monté à rotation par rapport à un axe essentiellement vertical (6, 106), l'axe vertical s'étendant à proximité du centre de la roue (Z) ;
c) une jambe de force (4) qui est connectée au support (3) et est supportée sur la carrosserie ;
d) un bras oscillant (8) qui est accouplé à la carrosserie et est connecté au support (3) dans une articulation (2) ;
**caractérisée en ce que**
la jambe de force (4) et/ou le support (3, 103) sont accouplés à un stabilisateur (20),
**en ce que** le bras oscillant (8) est fixé sur le support (3, 103) ou l'élément de palier dans une articulation à rotule (2), et **en ce que**
la jambe de force (4) est disposée dans une position relativement basculée par rapport à la verticale.

2. Suspension de roue pour un véhicule automobile, comprenant :
a) un élément de palier (201) pour l'essieu ;
b) un support (203) sur lequel l'élément de palier est monté à rotation par rapport à un axe essentiellement vertical (206), l'axe vertical s'étendant à proximité du centre de la roue (Z) ;
c) une jambe de force (204) qui est connectée au support (203) et est supportée sur la carrosserie ;
d) un bras oscillant (208) qui est accouplé à la carrosserie et est connecté à l'élément de palier (201) dans une articulation (202) ;
**caractérisée en ce que**
la jambe de force (204) et/ou le support (203) sont accouplés à un stabilisateur (220),
**en ce que** le bras oscillant (208) est fixé sur le support (203) ou l'élément de palier (201) dans une articulation à rotule, et **en ce que**
la jambe de force (204) est disposée dans une position relativement basculée par rapport à la verticale.

3. Suspension de roue selon la revendication 1 ou 2,
**caractérisée en ce que**
le stabilisateur (20, 220) est accouplé à la jambe de force (4, 204) et/ou au support (3) par le biais d'un palier élastique ou d'une articulation à rotule (21, 221).

4. Suspension de roue selon au moins l'une quelconque des revendications 1 à 3,
**caractérisée en ce que**
la jambe de force (4, 204) est dans le même plan que l'essieu directeur.

5. Suspension de roue selon au moins l'une quelconque des revendications 1 à 4,
**caractérisée en ce que**
le bras oscillant (8, 208) est fixé à la carrosserie dans au moins une articulation à charnière (10, 210).

6. Suspension de roue selon au moins l'une quelconque des revendications 1 à 5,
**caractérisée en ce que**
l'élément de palier est réalisé sous la forme d'une branche d'essieu (1, 201) ou sous forme de broche (101) .
